# EUROPEAN PATENT APPLICATION

(11) **EP 1 104 792 A1**
(43) Date of publication of application: **06.06.2001**
(21) Application number: 99123230.7
(22) Date of filing: 26.11.1999
(51) Int. Cl.: C09D 11/10, C08G 59/14, C09D 163/10

(54) **Rosin-modified epoxy acrylates**

(71) Applicant: SUN CHEMICAL CORPORATION, Fort Lee, NJ 07024 (US)
(72) Inventor: The designation of the inventor has not yet been filed
(74) Representative: VOSSIUS & PARTNER

(57) **Abstract**

Epoxy (meth)acrylates which are modified by rosin and useful as binder materials for UV- or EB curable coatings, printing inks, adhesives etc. and a method for preparing same.

## Description

The invention relates to rosin-modified epoxy acrylates, a method for their production and their use. Especially, the invention relates to modified epoxy acrylates which are useful as binders for coatings and printing inks and are cured by ultraviolet (UV) radiation or electron beam (EB).

Curable systems like coatings (primers, lacquers etc.), printing inks, adhesives and sealings contain oligomeric binders which polymerize and/or crosslink (i.e. cure) by exposure to EB or UV radiation. By this chemical modification the system (e. g. printing ink) cures. Suitable binders are acrylate oligomers with defined molecular weight, which are obtained by reacting acrylic or methacrylic acid with epoxy resins (results in epoxy acrylates), diisocyanate (results in polyurethane acrylates) or polyesters (results in polyester acrylates).

The use of acrylate oligomers as binder materials in EB or UV curable systems is well-known in the graphic arts. Most ink manufacturers have proprietary knowledge as to which oligomeric moieties provide the best pigment wetting characteristics. It is a well-known fact that polyester acrylates are the most widely used oligomers for pigment wetting, providing excellent colour development properties.

Epoxy acrylates are inexpensive and cure fast, however, they have the disadvantage of a relatively bad pigment wetting capability which results in coatings and inks having low gloss and poor lithographic performance. Polyurethane acrylates are characterized by toughness and good chemical resistance but they are relatively expensive. In the Graphic Arts Industry, UV and EB formulations predominantly contain polyester acrylates, especially polyester tetra- and hexaacrylates, since they have superior pigment wetting capability and good lithographic and flexographic performance. The disadvantage of these materials, however, is that they are relatively expensive.

There have been some attempts to limit the use of polyester acrylates and thereby reduce the costs without losing the advantages of polyester acrylates (such as pigment wetting capability).

The object of the present invention is to provide oligomeric binders which are less expensive than polyester acrylates and do not negatively effect the pigment wetting capability and printing performance when used in a printing ink or coating formulation.

This object is achieved by a modified epoxy acrylates obtainable by reacting 10 to 30 parts by weight of a rosin with 90 to 100 parts by weight acrylic and/or methacrylic acid and 100 to 120 parts by weight of an epoxy diglycidyl ether in the presence of a suitable catalyst like zinc, zirconium or titanium complexes (e.g. zirconium carboxylate) and a suitable inhibitor like hydroquinone and benzoquinone until the acid value has reached an appropriate level, preferably below 10 mg KOH/g, more preferably below 5 mg KOH/g.

In the modified epoxy (meth)acrylates of the present invention the epoxy moiety is preferably derived from an aromatic epoxy diglycidyl ether like the diglycidyl ether of bisphenol A.

The rosin used for modifying epoxy (meth)acrylates according to the present invention may be selected from gum rosin, wood rosin and tall-oil rosin.

Preferably the reaction is carried out in the further presence of 1 to 3 parts by weight of a dispersant and 5 to 10 parts by weight of a polyfunctional monomer.

As the dispersant any product or mixture of products that can promote the formation of a dispersion or stabilize a dispersion can be used. Well-known dispersants which are useful in the present invention are for instance alkali-metal polycarbonates, polysulfonates or polyphosphates, usually sodium salts; furthermore, the use of lignin sulfonates and of condensation products of aromatic sulfonic acid with formaldehyde is very widespread. In addition, poly(vinyl alcohol), poly(vinyl pyrrolidone), poly(vinyl sulfates), polyacrylamide and maleic acid-styrene copolymers are known to often have a synergistic effect in disperse systems and are therefore also useful in the present application.

By using a polyfunctional monomer the crosslinking density increases; useful polyfunctional monomers are for instance pentaerythritol(ethoxy)tri- or tetraacrylate, propoxylated glycol triacrylate, trimethylol propane, hexanediol diacrylate and tripropylene glycol diacrylate.

The rosin-modified epoxy (meth)acrylates according to the present invention are useful as oligomeric binder materials for preparing UV and EB printing inks, i. e. inks which are cured by UV radiation or electron beam. Such inks usually contain a pigment, solvent and other additives. The solvents in these inks are low-viscosity non-reactive monomers which are capable of reacting on their own so that they become fully incorporated into the ultimate polymer matrix. The solvents (also called diluents) present in radiation-curable systems are incorporated in the network during cross-linking. They influence the viscosity of the mixture and the physical and chemical properties of the composition. Useful monomers are monofunctional monomers like isobornyl acrylate and N-vinylpyrrolidone for improving the flexibility of the end product, difunctional monomers like hexanediol diacrylate and tripropylene glycol diacrylate (TPGDA) and tri- or tetrafunctional monomers like trimethylol propane triacrylate, pentaerythritol (ethoxy) tri- or tetraacrylate and propoxylated glycol triacrylate, which increase the crosslinking density of the final product.

The pigments used in UV and EB inks are not limited but every pigment and pigment mixture suitable for use in conventional printing ink formulations can be used.
Usually the pigments are present in an amount of 5 to 25 wt% based on the total ink composition; more preferred is an amount of from 10-20 wt%.

Although the amount of the binder(s) is not critical, the binder(s) (also called prepolymers) are preferably used in an amount of from 20-40 wt% based on the total ink composition, more preferable from 25-35 wt%. In the ink compositions according to the present application the modified epoxy acrylates can be used as the sole binder of an ink or said modified epoxy acrylates can be used in combination with other binders, preferably polyester acrylates.

In a preferred embodiment of the present application, a printing ink composition is formed comprising polyester acrylate and modified epoxy acrylate. When the modified epoxy acrylate is used in combination with a polyester acrylate, it is preferred that the amount (wt%) of the modified epoxy acrylate is lower or equal to the amount of polyester acrylate based on the total ink composition; in an especially preferred embodiment herein they sum up to 20-40 wt% based on the total printing ink composition.

The amount of diluent (also called functional monomer) or mixture of diluents is usually in the range from 10-40 wt%, more preferable from 10-25 wt% based on the total ink composition.

In UV inks a photoinitiator or a mixture of photoinitiators is present as additive. There can be used a single photoinitiator or a mixture of two or more. Every photoinitiator known in the art can be used; examples are benzophenone and derivatives thereof, tertiary amines, acrylated amines and benzoin ethers. The amount of photoinitiator used in UV inks usually is in the range from 5-15 wt%, more preferably 8-10 wt% based on the total printing ink composition.

Printing ink compositions according to the present invention may also contain extenders which are commonly known in the field of printing inks, e.g. calcium carbonate and titanium oxide.

Certain embodiments of the present invention are illustrated by the following examples which are not intended to limit the scope of the present application.

### Example 1

Components 1,2,3,4,5 and 6 as shown in Table 1 (below) were charged into a 1000 ml reaction vessel and stirred. This mixture was heated slowly to 90°C for 60 minutes and then component 7 was charged slowly over a period of 45 minutes with stirring. The temperature was not allowed to exceed 110°C in order to avoid gelation. Next, the temperature was increased to 100°C with agitation. Every 30 minutes a sample was taken and the acid number of the same was determined. After 4 hours the mixture had an acid number around 20 mg KOH/g. Then component 8 was charged at 100°C and the reaction was allowed to proceed until the acid value was below 5 mg KOH/g.

**Table 1**

| **No.** | **component** | **amount(wt%)** |
|---|---|---|
| 1. | aromatic epoxy diglycidyl ether¹) | 39.00 |
| 2. | rosin²⁾ | 8.00 |
| 3. | aliphatic epoxy diglycidyl ether³⁾ | 19.00 |
| 4. | inhibitor⁴⁾ | 0.03 |
| 5. | zirconium carboxylate | 1.50 |
| 6. | pentaerythritol ethoxy tetra acrylate (PPTTA) | 7.47 |
| 7. | acrylic acid | 23.00 |
| 8. | hyperdispersant⁵⁾ | 2.00 |
| | | 100.00 |

| | | |
|---|---|---|
| 1) Der 331 available from Shell | | |
| 2) Staybelite E available from Lawter | | |
| 3) Epodil 757 available from Air Products | | |
| 4) hydroquinone | | |
| 5) Solsperse 24000 available from Zeneca | | |

### Example 2

The rosin-modified epoxy acrylate was prepared in the same way as described in Example 1 except with the components shown below in Table 2.

**Table 2**

| **No.** | **component** | **amount(wt%)** |
|---|---|---|
| 1. | aromatic epoxy diglycidyl Ether | 55.00 |
| 2. | rosin | 8.00 |
| 3. | inhibitor | 0.03 |
| 4. | zirconium carboxylate | 1.50 |
| 5. | PPTTA | 6.97 |
| 6. | tripropylene glycol diacrylate (TPGDA) | 6.00 |
| 7. | acrylic acid | 20.50 |
| 8. | hyperdispersant | 2.00 |
| | | **100.00** |

### Examples 3-6

A yellow and blue color UV curable offset ink was prepared by using the rosin-modified epoxy acrylates as synthesized in Examples 1 and 2 above. The components and amounts are listed below in Tables 3 and 4.

**Table 3**

| **Component** | **Amount(wt%)** |
|---|---|
| epoxy acrylate¹⁾ | 25.50 |
| epoxy acrylate gel²⁾ | 8.00 |
| polyester acrylate³⁾ | 15.00 |
| rosin-modified epoxy acrylate | 15.00 |
| propoxylated glycol tri acrylate⁴⁾ | 4.00 |
| pentaerythritol ethoxy tetra acrylate⁵) | 7.30 |
| extender⁶⁾ | 1.50 |
| photoinitiator blend⁷⁾ | 9.00 |
| pigment | 14.70 |
| | **100.00** |

| | |
|---|---|
| 1) EPAC-1 available from Reichhold | |
| 2) X4-6420 available from Reichhold | |
| 3) Ebecryl 657 available from UCB | |
| 4) Actilane 432 available from Ackros | |
| 5) Actilane 440 available from Ackros | |
| 6) CaCO₃ | |
| 7) mixture of benzophenone and dimethylethanolamine | |

**Table 4**

| Example | rosin-modified epoxy acrylate | pigment |
|---|---|---|
| 3 | obtained in Example 1 | yellow pigment⁸⁾ |
| 4 | obtained in Example 1 | blue pigment⁹⁾ |
| 5 | obtained in Example 2 | yellow pigment⁸⁾ |
| 6 | obtained in Example 2 | blue pigment⁹⁾ |

| | | |
|---|---|---|
| 8) GRC-2100 PX 13 available from Sun was used as a yellow pigment | | |
| 9) Fastogen Blue 5375 available from DIC was used as a blue pigment | | |

For comparison standard UV curable offset inks containing no rosin-modified epoxy acrylate only polyester acrylate as used in the Examples were prepared (Comparative Examples 1 and 2). These compositions differ from that shown in Table 3 above in that the amount of the polyester acrylate was 30.00 wt.% while the amount of the rosin-modified epoxy acrylate was 0 wt.%.

Printing inks were formulated by mixing all components and grounding the mixture in a three roll mill for three passes and the time for grind was noted. The inks of Examples 3-6 all showed equivalent grind properties compared to the inks prepared with UV-modified rosins (see Comparative Examples 1 and 2). The tack was determined by using a tack-o-scope at 30°C (Electronic Inkometer Model 106, available from Thwing-Albert Instrument Company, Philadelphia) and viscosity was measured with a Physica Cone and Plate Viscometer at 25°C. The color strength was determined via ACS (Color Computer) and confirmed visually. The results are summarized in Table 5 below.

**Table 5**

| Example | Tack units | Viscosity Pa ·s | Color strength % |
|---|---|---|---|
| 3 | 143 | 10.5 | 102 |
| 4 | 156 | 11.5 | 105 |
| 5 | 165 | 12.8 | 104 |
| 6 | 157 | 13.0 | 109 |
| Comp. Ex. 1^{*} | 190 | 16.1 | 100 |
| Comp. Ex. 2^{**} | 184 | 15.4 | 100 |

| | | | |
|---|---|---|---|
| * with yellow pigment⁸⁾ | | | |
| ** with blue pigment⁹⁾ | | | |

As is apparent from Table 5 above the tack and viscosity of the printing inks of Examples 3-6 were slightly lower than that of the paste inks of Comparative Examples 1 and 2. The color strength afforded the same level of color development. Therefore, although less expensive since part of the conventional polyester acrylates are replaced by the rosin-modified epoxy acrylates of the present invention the printing inks according to the present invention show similar properties to those which contain conventional polyester acrylates.

## Claims

1. Use of an epoxy diglycidyl ether, acrylic and/or methacrylic acid, a dispersant, a polyfunctional monomer and rosin for the preparation of a printing ink.

2. Method for the preparation of a modified epoxy acrylate, comprising reacting 10-30 parts by weight of a rosin with 90 to 100 parts by weight of acrylic and/or methacrylic acid and 100 to 120 parts by weight of an epoxy diglycidyl ether in the presence of a catalyst and a suitable inhibitor until the acid value has reached an appropriate level.

3. Method according to claim 2, wherein the reaction is carried out in the further presence of 1 to 3 parts by weight of a dispersant and 5 to 10 parts by weight of a polyfunctional monomer.

4. Method according to claim 2 or 3 wherein the rosin is selected from gum rosin, wood rosin and tall-oil rosin.

5. Modified epoxy(meth)acrylate obtainable by the method of any of claims 2 to 4.

6. Use of the modified epoxy(meth)acrylate of claim 5 for the preparation of coatings, lacquers and printing inks.

7. Printing ink composition comprising a modified epoxy(meth)acrylate as defined in claim 5.

8. Printing ink composition according to claim 7, which further comprises at least one member selected from extenders, photoinitiators and pigments.

9. Printing ink composition according to claim 7 or 8, which further comprises a polyester acrylate.

10. Printing ink composition according to claim 9 wherein the amount (wt%) of modified epoxy(meth)acrylate based on the total ink composition is lower or equal to the amount of polyester acrylate.
